# EUROPEAN PATENT APPLICATION

(11) **EP 2 360 774 A1**
(43) Date of publication of application: **24.08.2011**
(21) Application number: 10154184.5
(22) Date of filing: 21.02.2010
(51) Int. Cl.: H01M 10/42

(54) **Permanent Battery**

(30) Priority: 24.01.2010 JP 2010028156
(71) Applicant: Tomoyasu, Yutaka, Fujisawa-shi, Kanagawa 251-0054 (JP)
(72) Inventor: Tomoyasu, Yoshioki, Fujisawa-shi Kanagawa 251-0054 (JP)
(74) Representative: Schwerbrock, Florian

(57) **Abstract**

The invention is related to development for an increase of the discharging capacity of the lead battery by means of removing substances which is produced in the chemical reaction process being liable to interfere the discharging efficiency seriously by means of washing out with drops of electrolyte dipped from the upper container on the battery cell through the small tube bored with the bottom plate of it.

## Description

FIELD OF THE INVENTION

The present invention is related to the field on the technology of increasing discharging capability of the storage battery to be applied to the power sources for the electric vehicle as well as for the stationary generator refraining CO₂ gases from being produced.

DESCRIPTION OF THE RELATED ART

The secondary battery or an accumulator have been suffered from being so low discharging capability that it is not applied to the electric power source for either application to drive electric vehicles or to operate electric appliances.

BRIEF SUMMARY OF THE INVENTION

The present invention is related to the secondary battery to increase the discharging capacity of the battery by means of continuously washing out substances which are set up through chemical reaction to interfere proceeding together with drops of electrolyte dripping from small tubes bored with the bottom plate of the upper reservoir. Permanent Buttery is designed to only discharge in the battery case and charging operation is applied to other electric bath located in the outside of the battery for the compound pumped out from the drain for the recycle use. It is allowed to keep discharging only at the highest voltage in Depth Of Discharge, thus developing best performance.

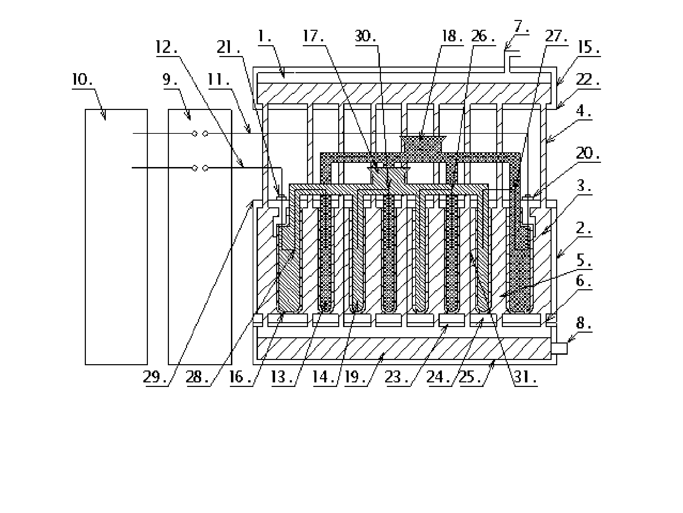

Fig.1: One example of the cross sectional view of the permanent battery

DETAILED DESCRIPTION OF THE INVENTION

As shown FIG.1, the present invention is illustrated taking an example of the lead stored battery loaded on the electric vehicleₒ Battery(3) contains several units of Cells(2) equipped with Anode (14) consisting of PbO₂ and Cathode (13) consisting of Pb which are stored in each reservoir with Anode material(17) and Cathode material(18) and Electrolyte(1) that is reserved in Reservoir(15), of which Bottom(22) is designed to drip drops of Electrolyte(1) through small-bored tubes(4) plunged into the solution of the inside of Cell(2), subsequently the dripped drops of Electrolyte(1) are liable to pull down compounds such as PbSO₄, and H⁺ gas around the electrode and heat which are set up through the process of chemical reaction to interfere discharging capacity seriouslyₒ Consequently, Electrolyte(1) in Battery Cell(2) is kept so clean that the chemical reaction involved is proceeded at high efficiency from a viewpoint of Depth Of Dischargeₒ Discharging operation for Permanent Battery is allowed to operate only on board and charging operation is processed with Compound(19) which is pumped out through Drain outlet(8) from Drain(25) to the electric bath located in the outside of Battery(3) where the charging operation is proceeded to deposit substances instituting the secondary battery for recycle useₒ Thus, the materials for Battery(3) such as Electrolyte(1), Anode(13) and Cathode(14) must be supplemented from the outside of Battery(3) to keep discharging operation continuouslyₒ Electrolyte Reservoir(15) is loaded on Battery Cell(2) to be supplied with Electrolyte(1) through Hose(7) from the outside of Battery(3) as if supplement for gasoline motor car is fed, and also Cathode material reservoir(18) is supplied with Cathode(13) substance and Anode material reservoir (17) is filled with Anode(14) substance in the same wayₒ Between them are induced with Wire(26,27,28,and 30) to deliver the electricity developed passing through Terminator(20) and Terminator(21) with Cable(11) and Cable(12) to Controller(9) to drive Motor(10)ₒ Both electrodes immersed in electrolyte (1) are consumed in volume through chemical reaction process, where electricity is developed through the discharging process in Battery Cells (2), wherein separated with Separator (31), thus both electrodes must be compensated with spare of substances respectively. Electrolyte(1) reserved in Electrolyte Reservoir(15) is designed to be dripped with drops through Small Tube(4) bored with Bottom of Reservoir(22) plunged into solution in Battery(1) where Compound(19) set up in the process of chemical reaction floating in Electrolyte(1) and Compounds(19) such as H⁺ and PbSO₄ which are liable to interfere electrolytic activity seriouslyₒ Compound(5) is drained through Small Tube(6) holed on Bottom of Cell (24) through Lid of Drain(23) to be accumulated in Drain(25) to be pumped out through Exit Drain ( 8 ) to the outside of Battery(3).

Another application of Permanent Battery of which principle as well as mechanism is in common with Fig.1 is to be applied to the stationary battery as an electric power source to operate appliances.

## Claims

1. Permanent battery is designed to load reservoirs on the battery cell respectively for supplement with substances constituting the battery to be consumed through the processes of the chemical reaction for discharging operation with drops of electrolyte being dripped through small tubes bored on the bottom of the upper reservoir loaded on the battery cell continuously, and with anode as well as cathode substances to be required for continuous discharging operation to pull down substances stagnated in immersing in electrolyte which is liable to interfere chemical activity seriously.

2. The discharging and charging operation in the secondary battery is designed to be divided into two stages in case where discharging operation of Permanent Battery is operated in the inside of the battery cell to the contrary of the fact that charging operation is operated in the outside of the battery cell by means of flowing out compound from drain to the electric bath to deposit electrodes and to purify the electrolyte for recycle use refraining from setting up CO₂.

3. Permanent battery is designed to circulate the materials for the secondary battery through the discharging operation inside the battery cell to the charging operation applied to the electric bath located in the outside of the battery cell to deposit respective materials and to purify the electrolyte for recycle use.
